# EUROPÄISCHE PATENTSCHRIFT

(11) **EP 0 712 656 B1**
(45) Veröffentlichungstag und Bekanntmachung des Hinweises auf die Patenterteilung: **20.02.2002**
(21) Anmeldenummer: 95115992.0
(22) Anmeldetag: 11.10.1995
(51) Int. Cl.: B01D 53/26

(54) **Verfahren und Vorrichtung zum Trocknen feuchten Gases**
Process and apparatus for drying wet gases
Procédé et dispositif pour sécher des gaz humides

(30) Priorität: 20.10.1994 DE 4437494
(43) Veröffentlichungstag der Anmeldung: 22.05.1996
(73) Patentinhaber: Gräff, Roderich W., 78126 Königsfeld (DE)
(72) Erfinder: Gräff, Roderich W., 78126 Königsfeld (DE)

(56) Entgegenhaltungen:
- EP-A- 0 379 975
- EP-A- 0 398 139
- US-A- 4 729 774
- US-A- 4 926 618

## Beschreibung

Die Erfindung betrifft ein Verfahren zum Trocknen feuchten Gases, insbesondere Luft, bei dem dem Gas die Feuchte durch ein Trocknungsmittel entzogen, das Trocknungsmittel durch ein heißes Regenerationsgas von der aufgenommenen Feuchte befreit und die Temperatur des das Trocknungsmittel verlassenden Regenerationsabgases erfaßt wird, sowie eine Vorrichtung zur Durchführung des Verfahrens.

In der US-Patentschrift 4,509,272 wird ein Verfahren zum Trocknen von Kunststoffgranulat beschrieben, bei dem warme, das Granulat durchströmende Trockenluft die Feuchte aus dem Granulat entzieht. Die feuchte Abluft aus der Granulattrocknung wird anschließend durch ein Trocknungsmittel, üblicherweise Molekularsieb oder eine Mischung aus diesem mit Silikagel, geleitet, welches der feuchten Abluft die aus dem Granulat mitgeführte Feuchte durch Adsorption entzieht. Wenn sich das Trocknungsmittel mit Feuchtigkeit gesättigt hat, wird es der Regeneration unterworfen, bei der heißes Regenerationsgas durch das Trocknungsmittel geleitet wird. Das heiße Regenerationsgas bringt das im Trocknungsmittel enthaltene Wasser zum Verdampfen, und das Regenerationsabgas nimmt den Wasserdampf nach außen mit. Nach abgeschlossener Regeneration, wenn also das Trocknungsmittel wieder trocken ist, wird wieder feuchte Luft, nämlich die Abluft aus dem Granulattrichter, durch das Trocknungsmittel geleitet.

Diese Trocknung der feuchten Abluft arbeitet sehr wirkungsvoll unter voller Last, d.h. wenn der Feuchtigkeitsgehalt der zu trocknenden Luft dem Maximalwert entspricht, für den die Anlage optimal, d.h. unter anderem mit geringstem Energieverbrauch und einem hinreichend guten Taupunkt der getrockneten Luft, ausgelegt ist. Die Energiebilanz verschlechtert sich jedoch, wenn die Wasserlast der zu trocknenden Luft geringer als die Volllast ist. Man stellt nämlich fest, daß in diesem Fall das Trocknungsmittel am Ende der Regenerationsphase eine wesentlich höhere Temperatur aufweist als unter Vollast und daß daher ein größerer Kühlaufwand zum Abkühlen des Trocknungsmittels auf eine Temperatur getrieben werden muß, die dem Trocknungsmittel die Adsorption von Feuchtigkeit aus der zu trocknenden Luft ermöglicht. Die Kühleinrichtung für das frisch regenerierte Trocknungsmittel muß also größer ausgelegt sein, als es unter Vollast notwendig wäre. Bei Teillast geht also Wärmeenergie durch zu starkes Aufheizen des Trocknungsmittels verloren. Andererseits ist die vom Regenerationsgas im Trocknungsmittel abgegebene Wärmemenge für den Vollastbetrieb der Lufttrocknung erforderlich.

In der US-Patentschrift 4 926 618 ist ein Verfahren und eine Vorrichtung beschrieben, bei welchem mit Feuchte beladene Prozeßluft durch einen Abschnitt eines mit Trocknungsmittel gefüllten Rotors zwecks Feuchteentzug geleitet wird. Durch einen weiteren Rotorabschnitt, der einen mit aufgenommener Feuchte beladenen Trocknungsmittelanteil enthält, wird aufgeheiztes Regenerationsgas zum Trocknen des Trocknungsmittelanteils geleitet. Das Regenerationsabgas wird teilweise ins Freie entlassen und teilweise wieder dem weiteren Rotorabschnitt zugeführt. Eine Steuereinrichtung nimmt Ausgangssignale eines in einer Regenerationsabgasleitung vorgesehenen Temperaturfühlers sowie Ausgangssignale eines in der Gaszuleitung angeordneten Feuchtefühlers auf und steuert entsprechend der anfallenden Feuchtelast Ventilklappen in Regenerationsgasleitungen sowie den Regenerationsgasdurchsatz und die Rotordrehgeschwindikeit.

Der Erfindung liegt die Aufgabe zugrunde, die Energiebilanz beim Trocknen feuchten Gases, insbesondere Luft, zu verbessern.

Dazu schlägt die Erfindung bei dem eingangs genannten Verfahren vor, den Durchsatz des-Regenerationsgases Trocknungsmittel in Abhängigkeit von der Temperatur des Regenerationsabgases derart zu steuern, daß die Temperatur des Regenerationsabgases auf einem vorgegebenen Wert verbleibt. Wenn daher die Temperatur des das Trocknungsmittel am Ende der Regeneration verlassenden Regenerationsgases über einen beispielsweise durch den Vollastbetrieb vorgegebenen Wert hinaus ansteigt, wird der Durchsatz des Regenerationsgases während der nächsten Regenerationszyklen solange herabgesetzt, bis der vorgegebene Wert wieder erreicht wird. Das Trocknungsmittel besitzt dann am Ende des nächsten Regenerationszyklus eine Temperatur, die etwa gleich derjenigen bei Vollastbetrieb ist, so daß keine überschüssige Wärmeenergie bei der Abkühlung des Trocknungsmittels verloren geht. Wenn andererseits die Temperatur des das Trocknungsmittel am Ende eines Regenerationszyklus verlassenden Regenerationsgases unterhalb des vorgegebenen Wertes bleibt, wird der Durchsatz an Regenerationsgas durch das Trocknungsmittel für den nächsten Regenerationszyklus erhöht, um sicher zu stellen, daß aus dem Trocknungsmittel alle Feuchtigkeit ausgetrieben ist.

Nach einem anderen Vorschlag der Erfindung wird zur Lösung der genannten Aufgabe die Verweilzeit des Trocknungsmittels in dem zu trocknenden Gasstrom in Abhängigkeit von der Temperatur des das Trocknungsmittel verlassenden Regenerationsgases und in Abhängigkeit vom Durchsatz des Regenerationsgases durch das Trocknungsmittel gesteuert. Wenn immer die Menge des Regenerationsgases herabgesetzt wird, wird die Zeitdauer des nächsten Regenerationszyklus und damit die Verweilzeit des Trocknungsmittels in dem zu trocknenden Gasstrom verlängert.

Eine Verkürzung der Zeitdauer der nächsten Regenerationsphase erfolgt nur, wenn die Regenerationsluftmenge der maximalen Menge entspricht und die Temperatur des das Trocknungsmittel am Ende einer Regenerationsphase verlassenden Regenerationsgases unter dem vorgegebenen Wert liegt.

In beiden Varianten hat das Trocknungsmittel am Ende eines Regenerationszyklus eine Temperatur, die etwa derjenigen entspricht, die es unter Vollast haben würde. Für die Kühlung des Trocknungsmittels wird also nach der Erfindung stets Vollastbetrieb mit der Folge simuliert, daß der bei Teillastbetrieb sonst nutzlose Energieaufwand beim Aufheizen des Regenerationsgases und beim Kühlen des Trocknungsmittels vermieden und die Energiebilanz der Lufttrocknung insgesamt verbessert wird.

Besonderen Vorteil bietet die Kombination beider Varianten, wonach eine Erniedrigung oder Erhöhung des Regenerationsgasdurchsatzes eine Verlängerung oder unter Umständen eine Verkürzung der Verweildauer des Trocknungsmittels im Regenerationsgasstrom bewirkt.

Das erfindungsgemäße Verfahren gestattet weitere vorteilhafte Ausgestaltungen, die in den Unteransprüchen angegeben sind. Wenn zum Beispiel das Trocknungsmittel etwa mit einem Rotor zyklisch bewegt wird, können das zu trocknende Gas kontinuierlich getrocknet und das Trocknungsmittel kontinuierlich regeneriert werden, sodaß die vorstehend erwähnten Regenerationsphasen ohne Unterbrechungen aneinander anschließen.

Zur Durchführung des erfindungsgemäßen Verfahrens eignet sich eine Vorrichtung zum Trocknen feuchten Gases, insbesondere Luft, mit einem ein Trocknungsmittel enthaltenden Behälter und einem Gebläse, welches das feuchte Gas dem Trocknungsmittel im Behälter zuführt, wobei an den Behälter eine Regenerationsgasleitung zur Zufuhr heißem Regenerationsgases zum Trocknungsmittel und eine ins Freie mündende Regenerationsabgasleitung angeschlossen sind und wobei in dem den Behälter verlassenden Regenerationsabgasstrom der Fühler eines Temperaturfühlers angeordnet ist, dessen Ausgangssignalleitung mit einem Steueranschluß einer den Durchsatz von Regenerationsgas durch das Trocknungsmittel steuernden Einrichtung verbunden ist. Diese Steuerung kann zweckmäßig dadurch geschehen, daß die Ausgangssignale des Temperaturfühlers ein im Regenerationsgasstrom zum Behälter angeordnetes Ventil beeinflussen. Alternativ können die Ausgangssignale des Temperaturfühlers ein Gebläse mit steuerbarer Drehzahl steuern, welches das heiße Regenerationsgas dem Behälter zuführt.

In weiterer Alternative können die Ausgangssignale des Temperatursfühlers oder die Stellung des Ventils oder die Drehzahl des Gebläses die Verweildauer des Trocknungsmittels im Regenerationsgasstrom steuern.

In zweckmäßiger Ausgestaltung der erfindungsgemäßen Vorrichtung ist der Behälter ein das Trocknungsmittel enthaltender Rotor, dessen Drehgeschwindigkeit von den Ausgangssignalen und vom Gasdurchlaßquerschnitt des Ventils gesteuert ist und dessen einem Teil kontinuierlich zu trocknendes Gas und dessen anderem Teil kontinuierlich heißes Regenerationsgas zugeführt wird. Während einer Umdrehung des Rotors wird durch das mitdrehende Trocknungsmittel längs eines Umfangsabschnittes zu trocknendes feuchtes Gas, längs eines anschließenden weiteren Abschnittes heißes Regenerationsgas und längs eines dritten Abschnittes Kühlmittel zugeführt.

Bevorzugte Ausführungsformen der erfindungsgemäßen Vorrichtung, wie sie beispielsweise auch zur Verwendung als raumlufttrocknendes Gerät geeignet machen, sind in weiteren Unteransprüchen angegeben.

Die Erfindung wird nachstehend anhand der in der beigefügten Zeichnung dargestellten Ausführungsbeispiele im einzelnen beschrieben.

Es zeigen:
- Fig. 1: eine Vorrichtung zum Trocknen von feuchter Abluft aus einem Trocknungsprozeß für Kunststoffgranulat;
- Fig. 2: eine schematische Darstellung der Vorrichtung nach Figur 1, jedoch nach einer anderen Ausführungsform der Erfindung; und
- Fig. 3: eine schematische Darstellung einer dritten Ausführungsform der Erfindung, die sich unter anderem zur Verwendung als raumtrocknendes Gerät empfiehlt.

Ein in einen Trocknungstrichter 1 eingefülltes, nicht dargestelltes Kunststoffgranulat aus beispielsweise PTFE wird in der Weise von in ihm enthaltener Feuchtigkeit befreit, daß längs einer Luftleitung 10 herangeführte trockene Luft nach Aufheizen in einem Heizer 2 in den Trichter 1 eingeleitet wird, dort das Kunststoffgranulat nach oben durchstreicht und den Trichter 1 über eine Abluftleitung 12 verläßt. Am unteren Ausgabestutzen 3 des Trichters 1 wird getrocknetes Kunststoffgranulat mittels Luft durch die Leitung 14 einem Einfülltrichter 4 zugeführt, der auf der Beschickungsöffnung einer im Ganzen mit 5 bezeichneten Extrudermaschine sitzt. Der Einfülltrichter 4 enthält einen nicht dargestellten Luftabscheider, so daß aus diesem die Förderluft längs der Leitung 16 abgezogen und einem Ventil 6 zugeführt werden kann.

Wie nachstehend im Einzelnen noch zu beschreiben sein wird, wird die mit Feuchtigkeit beladene Abluft 12 durch ein in einem Trockner 8 enthaltenes Trocknungsmittel geführt, welches aus der Abluft die Feuchtigkeit adsorbiert, die dann als Trockenluft über Leitung 10 zur Fortsetzung des Granulattrocknungsprozesses verwendet werden kann. Wenn das Trocknungsmittel mit Feuchtigkeit gesättigt ist, wird es einer Regeneration unterworfen, bei der heiße Regenerationsluft durch das Trocknungsmittel geleitet wird und diesem die Feuchte entzieht. Das getrocknete Trocknungsmittel kann dann wieder die Abluft trocknen.

Der Trockner 8 weist im wesentlichen einen von einem Elektromotor 9 über ein Reibrad oder Ritzel 31 an seiner Peripherie angetriebenen Rotor 32 auf, der gemäß Pfeil 33 bei Draufsicht in Uhrzeigerrichtung dreht und dazu entsprechend in nicht dargestellten Lagern um seine Achse drehbar gelagert ist. Der Rotor 32 ist mit einem Trocknungsmittel beispielsweise Molekularsieb gefüllt. Das Trocknungsmittel im Rotor 32 durchläuft während der Drehung des Rotors 32 in Umfangsrichtung drei hintereinander liegende Abschnitte 34, 36 und 38. Das Trockennungsmittel, das sich gerade im Abschnitt 34 befindet, wird dazu benutzt, die Abluft aus der Leitung 12 zu trocknen; das gerade den Abschnitt 34 durchlaufende Trocknungsmittel wird durch Regenerationsluft wieder getrocknet; und das den Abschnitt 38 durchlaufende Trocknungsmittel wird von der Regenerationstemperatur des vorhergehenden Abschnittes 36 auf eine Temperatur herunter gekühlt, in der das Trocknungsmittel bei Eintritt in den Abschnitt 34 Feuchtigkeit aus der Abluft adsorbieren kann, also beispielsweise auf etwa 60°C bei Verwendung von Molekularsieb als Trocknungsmittel.

Dazu mündet die Abluftleitung 12 in eine Feuchtluftleitung 18, die in das Ventil 6 führt. Die Auslaßleitung 20 aus dem Ventil 6 führt die feuchte Abluft in ein Zirkulationsfilter 35, dessen Ausgangsluftleitung 22 über einen Kühler 37 und eine Luftleitung 21 in die Ansaugöffnung eines Gebläses 39 führt. Der aus der Druckseite des Gebläses 39 ausströmende Feuchtluftstrom wird geteilt, und zwar ein erster Feuchtluftstrom wird über eine erste Feuchtluftleitung 24 dem Abschnitt 34 des Rotors 32 von unten zugeführt. Eine zweite Feuchtluftleitung 26 leitet Feuchtluft in den Abschnitt 38 des Rotors 32. Das Verhältnis der beiden Luftströme ist so gewählt, daß der zweite, durch die Leitung 26 streichende Feuchtluftstrom einen geringeren zeitlichen Durchsatz hat als der durch die Leitung 24 herangeführte Feuchtlufthauptstrom. Wie aus Vorstehendem ersichtlich, wird der aus Leitung 24 in den Abschnitt 34 des Trocknungsmittels eingeleitete Feuchtlufthauptstrom dort von seiner Feuchtigkeit befreit und verläßt den Abschnitt 34 auf der gegenüberliegenden Seite des Rotors 32 über die Trockenluftleitung 10. Der mengenmäßig kleinere Feuchtluftstrom aus Leitung 26 dient zum Kühlen des sich im Abschnitt 38 befindenden Trocknungsmittels, verliert in diesem seine Feuchtigkeit kaum (weil das Trocknungsmittel bei den in Abschnitt 38 vorherrschenden höheren Temperaturen keine Feuchtigkeit adsorbieren kann) und verläßt den Abschnitt 38 auf der gegenüberliegenden Seite des Rotors 32 durch Leitung 28 als weiterer Feuchtluftstrom, der in die Feuchtluftleitung 18 mündet.

Zur Regeneration des im Abschnitt 36 sich während der Drehung des Rotors 32 befindenden Trocknungsmittels saugt ein weiteres Gebläse 59 Außenluft gemäß Pfeil 58 an und drückt sie über Außenluftleitung 42 durch ein Ventil 64. Von der Auslaßöffnung des Ventils 64 führt eine Luftleitung 44 in einen Regenerationsheizer 55, der die über Leitung 44 ankommende Luft auf eine Temperatur von beispielsweise 250°C bei Verwendung von Molekularsieb bringt. Die den Regenerationsheizer 55 verlassende Regenerationsluft gelangt über Regenerationsleitung 46 in den Abschnitt 36 des Rotors 32. Die Auslaßleitung 48 für den Abschnitt 36 verlassende, mit Feuchtigkeit beladene Regenerationsabluft wird ins Freie entlassen. Wie aus der Anordnung der Gebläse 39 und 59 zu erkennen ist, wird die Regenerationsluft durch das Trocknungsmittel im Abschnitt 36 entgegengesetzt zur Strömungsrichtung der aus den Leitungen 24 und 26 kommenden Feuchtluft hindurchgeleitet.

In der Regenerations-Abluftleitung 48 sitzt der Fühler 60 eines Temperaturfühlers 62. Die Anordnung der Regenerations-Abluftleitung 48 ist so getroffen, daß sie nahe dem Ende des Abschnittes 36 mit dem Rotor 32 gekoppelt ist, so daß die Regenerationsabluft in Leitung 48 im wesentlichen aus einem Trocknungsmittelbereich stammt, der sich am Ende der Regeneration befindet.

Eine Ausgangssignalleitung 61 aus dem Temperaturfühler 62 führt zu einem ersten Eingang eines Steuergerätes 66 und eine Ausgangssignalleitung 67 führt für die Größe des Durchlaßquerschnittes des Ventils 64 repräsentative Signale einem zweiten Eingang des Steuergerätes 66 zu. Eine erste Ausgangsleitung 63 aus dem Steuergerät 66 liefert Steuersignale an das Ventil 64 zur Steuerung dessen Durchlaßquerschnittes entsprechend den Ausgangssignalen aus dem Temperaturfühler 62 auf Leitung 61. Eine zweite Ausgangsleitung 65 aus dem Steuergerät 66 führt Steuersignale in Abhängigkeit von den Signalen auf Leitung 67 dem Rotor 9 zur Steuerung dessen Drehzahl zu. Das elektromagnetische Stellventil 64 ist so ausgelegt, daß es in Abhängigkeit von der Art der über Leitung 61, 63 angebotenen Ausgangssignale des Thermofühlers 62 den Durchlaßquerschnitt für die Luft aus der Leitung 42 vergrößert oder verkleinert. Damit wird der Durchsatz an Regenerationsluft aus der Regenerationsleitung 46 durch den Abschnitt 36 von der Art der Ausgangssignale auf den Leitungen 61, 63 und das heißt, von der von dem Fühler 60 erfaßten Temperatur der Regenerationsabluft in Leitung 48 abhängig gemacht.

Entsprechend beeinflußt die Art der Ausgangssignale auf den Leitungen 61 und 65 und auf einer Leitung 66, die das Stellventil mit dem Elektromotor 9 verbindet, die Drehzahl des Elektromotors 9 und damit die Drehzahl des Rotors 32 und damit die Verweildauer des Trocknungsmittels in den Abschnitten 34, 36 und 38 des Rotors 32.

### Beispiel:

Der Trockner 8 ist so ausgelegt, daß bei dem zu erwartenden höchsten Feuchtigkeitsgehalt in der Abluft ein energiesparendes Trocknen derselben im Rotor 32 bei einem guten Taupunkt von z.B. -10°C der Trocknungsluft möglich ist. Dazu ist ein bestimmter Durchsatz an Regenerationsluft durch den Abschnitt 36 erforderlich, der die größte Öffnung im Ventil 64 bestimmt und bei einer durch die Heizung 55 auf 250°C erhitzten Regenerationsluft eine Regenerationsablufttemperatur von etwa 150°C erzeugt, bei der davon ausgegangen werden kann, daß alle Feuchte aus dem Trocknungsmittel ausgetrieben ist. Die erfahrungsgemäß relativ langsamen Änderungen des Feuchtigkeitsgehaltes der zu trocknenden Luft erlauben eine Steuerung etwa wie folgt:

Angenommen, die zu trocknende Last ist halb so groß wie diejenige, wofür der Trockner 8 optimal ausgelegt ist. Dann steigt die Regenerationsablufttemperatur in der Leitung 48 an, weil das Trocknungsmittel mit weniger Feuchte beladen ist, mithin schneller regeneriert wird und daher die Regenerationsablufttemperatur allmählich sich der Eingangstemperatur der Regenerationsluft in Leitung 46 (250°C) nähert. Diesen Temperaturanstieg erfaßt der Temperaturfühler und erzeugt Ausgangssignale auf Leitungen 61 und 63, die das Ventil 64 zur Verringerung seines Durchlaßquerschnittes proportional zum Temperaturanstieg der Regenerationsabluft, im angenommenen Beispiel auf 50 % veranlassen. Die nämlichen Ausgangssignale auf den Leitungen 61 und 65 bewirken auch, daß die Drehgeschwindigkeit des Motors 9 proportional, im Beispiel also auf 50 % reduziert wird. Wenn bei Vollast der Rotor zwanzig Minuten für eine Umdrehung braucht, wird diese Zeitspanne jetzt auf vierzig Minuten ansteigen. Wenn man weiter annimmt, daß der Abschnitt 34 etwa ein Drittel der gesamten Rotorfläche (quer zu seiner Drehachse) ausmacht, wird das Molekularsieb als Trocknungsmittel sich im Normalfall sechs 2/3 Minuten im Trockenprozeß der Abluft befinden. Bei der angenommenen Reduktion der Drehzahl des Elektromotors 9 um 50 % erhöht sich demnach die Verweildauer des Trocknungsmittels im Abschnitt 34 auf dreizehn 1/3 Minuten. Diese Zeitspanne genügt, daß das Trocknungsmittel im Abschnitt 34 sich trotz halber Feuchtelast der Abluft optimal mit Feuchtigkeit anreichert. Die Regeneration im Abschnitt 36 dauert jetzt natürlich auch doppelt so lange, wird jedoch mit halbem Regenerationsluftdurchsatz durchgeführt. Letzteres bedeutet, daß der Regenerationsheizer 55 nur den halben Luftdurchsatz auf die erforderliche Temperatur von 250°C bringen muß, was zu einer erheblichen Energieeinsparung führt.

Wenn die Feuchtelast der Abluft 12 wieder ansteigt, wird die Regenerationsanforderung für das Trocknungsmittel ansteigen, so daß die Temperatur der Regenerationsabluft in Leitung 48 absinkt. Die auf den Leitungen 61, 63 stehenden Ausgangssignale sind dann solcher Art, daß sie das Ventil 64 veranlassen, seinen Durchlaßquerschnitt zu erhöhen bis wieder der Wert von 150°C erreicht wird. Die Drehzahl des Elektromotors 9 wird erst dann wieder erhöht, wenn das Ventil 64 voll geöffnet ist und trotzdem die Temperatur in Leitung 48 unter 150°C absinkt.

Die Änderung der Drehgeschwindigkeit des Rotors kann stufenlos, oder, wenn der Motor 9 ein Schrittmotor ist, schrittweise durch Änderung der Schrittlänge oder Schritthäufigkeit erreicht werden.

Das Ventil 64 kann selbstverständlich an beliebiger Stelle im Regenerationsluftstrom angeordnet werden, also beispielsweise auch in die Regenerationsluftleitung 46 oder 48 statt zwischen die Leitungen 42 und 44 eingeschlossen werden.

Weiter liegt es im Rahmen der Erfindung, das Ventil 64 entfallen zu lassen und mit den Ausgangssignalen auf Leitung 61 die Drehzahl des Gebläses 59 über das Steuergerät 66 zu steuern. Die Drehzahl des Motors 9 kann dann durch das Steuergerät 66, das jetzt für die Drehzahl des Gebläses 59 repräsentative Steuersignale von letzterem erhält, gesteuert werden. Ferner kann beispielsweise eine Messung des Luftdrucks in den Leitungen 42 und 44 erfolgen. Die Meßwerte werden dem Steuergerät 66 zugeführt, dessen Ausgangssignale die Drehzahl des Motors steuern. Es empfiehlt sich generell, die Drehgeschwindigkeit des Motors 9 proportional zum Durchsatz an Regenerationsluft durch eine der Leitungen 42, 44 oder 46 zu steuern.

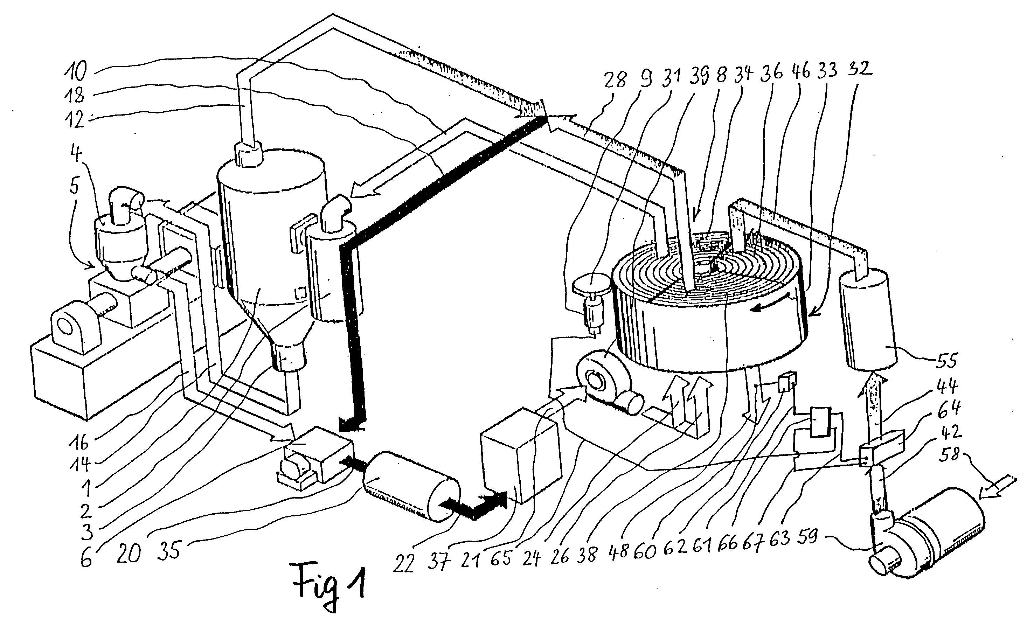

Das in Figur 2 schematisch dargestellte Ausführungsbeispiel der Erfindung unterscheidet sich vom vorstehend beschriebenen im wesentlichen dadurch, daß nur ein einziges Gebläse 39a vorhanden ist und das Gebläse 59 entfällt. Die mit den Bauteilen aus Figur 1 gleichartigen Bauteile sind in Figur 2 mit dem Zusatz (a) bezeichnet. Es wird nachfolgend daher nur der Unterschied zur vorstehend beschriebenen Ausführungsform erläutert. Das Steuergerät 66 sowie der steuerbare Antrieb des Rotors 32a sind zur Vereinfachung weggelassen.

Von der Feuchtluftleitung 26a, die in den Kühlabschnitt 38a führt, zweigt eine Luftleitung 41 ab, die durch einen Wärmetauscher 51 führt. Abstromseitig zum Wärmetauscher 51 wird die Luft aus Leitung 41 durch Leitung 42a über ein Ventil 64a und eine anschließende Leitung 44a dem Regenerationsheizer 55a zugeleitet, in welchem sie auf Regenerationstemperatur von beispielsweise 250°C gebracht wird. Abstromseitig zum Regenerationsheizer 55a führt die Regenerationsluftleitung 46a in den Regenerationsabschnitt 36a des Rotors 32a. Die Regenerationsabluftleitung 48a aus dem Regenerationsabschnitt 38a des Rotors 32a führt wieder durch den Wärmetauscher 51 und von diesem ins Freie, und gibt die von ihr mitgeführte Wärme im Wärmetauscher 51 an die von der Leitung 41 herangeführte Feuchtluft ab. In der Regenerations-abluftleitung 48a sitzt der Fühler eines Thermofühlers 62a, dessen Ausgangsleitung wieder zum Steuereingang des Ventils 64a führt.

Man sieht, daß die auf Leitung 21a vom Kühler 37a dem Gebläse 39a zugeführte Feuchtluft auf der Druckseite des Gebläses zum Hauptteil über Leitung 24a durch den Trocknungsabschnitt 34a des Rotors 32a geleitet und über die Trockenluftleitung 10a wieder dem Trocknungstrichter 1a zugeführt wird. Ein kleinerer Teil der das Gebläse 39a verlassenden Feuchtluft dient über Leitung 26a zur Kühlung des Trocknungsmittels im Kühlabschnitt 36a des Rotors 32a und wird abstromseitig von letzterem über Leitung 28a zusammen mit der über Leitung 12a ankommenden feuchten Abluft in die Feuchtluftleitung 18a eingespeist. Ein dritter Teil der das Gebläse 39a verlassenden Feuchtluft wird über eine von der Feuchtluftleitung 26a abzweigende Leitung 41 zur Regenerationsluft in dem Wärmetauscher 51 und im Regenerationsheizer 55a aufbereitet. Die Abhängigkeit des Volumenstroms an Regenerationsluft wird wieder wie beim vorstehenden Beispiel durch den Öffnungsquerschnitt des Ventils 64a bestimmt, der von den Ausgangssignalen des Thermöfühlers 62a gesteuert wird.

Diese Ausführungsform der Erfindung ist nicht nur apparativ weniger aufwendig sondern hat auch eine noch günstigere Energiebilanz, in dem die von der Regenerationsabluft auf Leitung 48a mitgeführte Wärme zum Vorheizen der zur Regenerationsluft aufzubereitenden Luft in Leitung 41 ausgenutzt wird. Damit kann der Regenerationsheizer 55a kleiner ausgelegt werden. Die Möglichkeit, die vom Gebläse 39a angelieferte Feuchtluft durch Aufheizen in den Wärmetauscher 51 und dem Regenerationsheizer 55a zur Regenerationsluft aufzubereiten, die eine erhebliche Wasseraufnahmefähigkeit besitzen muß, empfiehlt sich besonders dann, wenn die von Abluft über Leitung 12a bei Vollast mitgeführte Feuchtigkeit weit unter dem Taupunkt dieser Luft liegt.

Da derjenige Teil der Feuchtluft, der zur Regenerationsluft aufbereitet wird, dem Luftkreislauf durch den Granulattrockner 1a entzogen wird, besteht auf der Saugseite des Gebläses 39a eine Frischluftansaugmöglichkeit über ein Luftfilter 53, welches über die abstromseitige Leitung 23 in die Feuchtluftleitung 21a mündet.

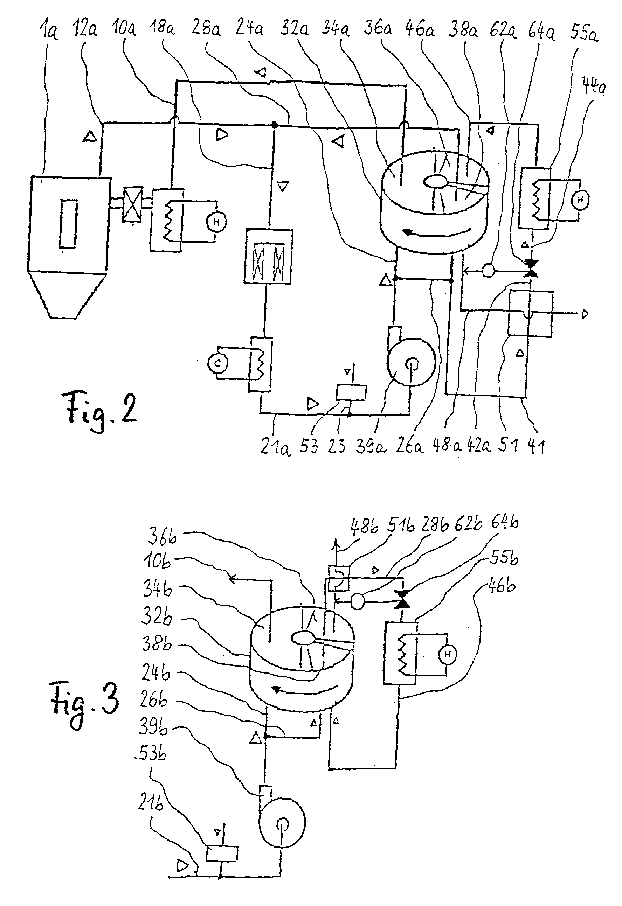

Ein weiteres Ausführungsbeispiel der Erfindung gemäß Figur 3 ist nicht nur zum Trocknen von Abluft aus Granulattrocknern sondern auch dazu geeignet, als raumluft-technisches Gerät eine mit nicht zu großer Feuchtigkeit belastete Raumluft zu entfeuchten. Die mit den Bauteilen aus den vorstehend beschriebenen Ausführungsbeispielen gleichartigen Bauteile bei der Ausführungsform nach Figur 3 sind mit dem Zusatz (b) bezeichnet. Das Steuergerät 66 sowie der steuerbare motorische Antrieb des Rotors 32b sind zur Vereinfachung weggelassen.

Luftleitung 21b saugt die Raumluft sowie über das Filter 53b Außenluft an und führt sie der Saugöffnung des Gebläses 39b zu. Von dessen Druckseite führt ein Feuchtlufthauptstrom über Luftleitung 24b durch den Trocknungsteil 34b eines Rotors 32b und das in ihm enthaltene Trocknungsmittel, beispielsweise Molekularsieb, und wird nach Durchlauf durch das Trocknungsmittel über Luftleitung 10b als Trockenluft in den Raum zurückgeblasen.

Die Zweigleitung 26b von der Leitung 24b führt durch den Kühlabschnitt 38b des Rotors 32b und verläßt diesen über eine Luftleitung 28b, welche einen Wärmetauscher 51b durchsetzt. Die in Leitung 28b durch das Trocknungsmittel im Abschnitt 38b geführte und dort sowie im Wärmetauscher 51b aufgewärmte Feuchtluft gelangt über das Ventil 64b in den Regenerationsheizer 55b, in welchem sie auf die Regenerationstemperatur aufgewärmt wird. Die Regenerationsleitung 46b aus dem Regenerationsheizer 55b wird durch den Regenerationsabschnitt 36b des Rotors 32b geleitet, woselbst sie das mit Feuchtigkeit gesättigte Trocknungsmittel regeneriert und dessen Feuchtigkeit über Regenerationsabluftleitung 48b durch den Wärmetauscher 51b mitnimmt und in die Außenluft abbläst. Ein Temperaturfühler 62b ist an der Regenerationsabluftleitung 48b angeordnet, erfaßt die Temperatur der Regenerationsabluft und bildet für die erfaßte Temperatur repräsentative Ausgangssignale, die dem Ventil 64b als Steuersignale zugeführt werden. Der Öffnungsquerschnitt des Ventils 64b bestimmt den Anteil der Feuchtluft, der aus dem Feuchtlufthauptstrom über Leitung 26b abgezweigt und zunächst zur Kühlung und sodann zur Regeneration der Trocknungsmittels benutzt wird.

In Figur 3 ist zwar dargestellt, daß der Regenerationsluftstrom den Regenerationsabschnitt 36b in gleicher Richtung wie der Feuchtlufthauptstrom aus Leitung 24b das Trocknungsmittel durchsetzt; die Regenerationsleitung und die Regenerationsabluftleitung 48b können jedoch auch, soweit in Übereinstimmung mit den vorstehend beschriebenen Ausführungsbeispielen der Erfindung, so gelegt werden, daß der Regenerationsluftstrom den Regenerationsabschnitt 36b entgegen der Strömungsrichtung des Feuchtlufthauptstromes das Trocknungsmittels durchsetzt.

## Patentansprüche

1. Verfahren zum Trocknen feuchten Gases, insbesondere Luft, bei dem dem Gas die Feuchte durch ein Trocknungsmittel entzogen, das Trocknungsmittel durch ein heißes Regenerationsgas von der aus dem Gas aufgenommenen Feuchte befreit und die Temperatur des das Trocknungsmittel verlassenden Regenerationsabgases erfaßt wird, **dadurch gekennzeichnet, daß** der Durchsatz des Regenerationsgases durch das Trocknungsmittel in Abhängigkeit von der Temperatur des Regenerationsabgases derart gesteuert wird, daß die Temperatur des Regenerationsabgases auf einem vorgegebenen Wert verbleibt.

2. Verfahren nach Anspruch 1, **dadurch gekennzeichnet, daß** das feuchte Gas durch einen Abschnitt (34, 34a, 34b) des zyklisch bewegten Trocknungsmittels geführt und das Regenerationsgas durch einen anderen Abschnitt (36, 36a, 36b) des Trocknungsmittels geleitet wird.

3. Verfahren zum Trocknen feuchten Gases insbesondere Luft, bei dem dem Gas die Feuchte durch ein Trocknungsmittel entzogen wird und das Trocknungsmittel durch ein heißes Regenerationsgas von der aufgenommenen Feuchte befreit wird, nach Anspruch 1 oder 2, **dadurch gekennzeichnet, daß** die Verweilzeit des Trocknungsmittels in dem zu trocknendem Gas in Abhängigkeit von der Temperatur des das Trocknungsmittel verlassenden Regenerationsgases und in Abhängigkeit vom Durchsatz des Regenerationsgases durch das Trocknungsmittel gesteuert wird.

4. Verfahren nach einem der Ansprüche 1 bis 3, **dadurch gekennzeichnet, daß** bei einem Anstieg der Temperatur des Regenerationsabgases der Regenerationsgasdurchsatz durch das Trocknungsmittel erniedrigt und die Verweilzeit des Trocknungsmittels im Regenerationsgastrom in Abhängigkeit von der Erniedrigung des Regenerationsgasdurchsatzes verlängert wird und daß bei einem Absinken der Temperatur des Regenerationsabgases zunächst der Regenerationsgasdurchsatz auf einem vorgegebenen Maximalwert erhöht und erst bei Erreichen des Maximalwertes die Verweilzeit verkürzt wird.

5. Verfahren nach einem der vorstehenden Ansprüche, **dadurch gekennzeichnet, daß** ein Teil des feuchten Gases zu Regenerationsgas aufbereitet wird.

6. Verfahren nach einem der vorstehenden Ansprüche, **dadurch gekennzeichnet, daß** ein weiterer Teil des feuchten Gases zur Kühlung des Trocknungsmittels nach dessen Regeneration benutzt wird.

7. Verfahren nach Anspruch 6, **dadurch gekennzeichnet, daß** der weitere Teil nach dem Kühlen des Trocknungsmittels zur Regenerationsgas aufbereitet wird.

8. Verfahren nach Anspruch 6, **dadurch gekennzeichnet, daß** der weitere Teil nach der Kühlung des Trocknungsmittels dem zu trocknenden feuchten Gas wieder zugeführt wird.

9. Verfahren nach einem der vorstehenden Ansprüche, **dadurch gekennzeichnet, daß** als Trocknungsmittel ein Molekularsieb oder ein Silikagel eingesetzt wird.

10. Verfahren nach einem der vorstehenden Ansprüche, **dadurch gekennzeichnet, daß** die Temperatur des das Trocknungsmittel verlassenden Regenerationsgases am Ende der Regeneration des Trocknungsmittels erfaßt wird.

11. Vorrichtung zum Trocknen eines feuchten Gases, insbesondere Luft mit einem Gebläse (39, 39a, 39b), welches das feuchte Gas einem ein Trocknungsmittel enthaltenden Behälter (32, 32a, 32b) zuführt, wobei an den Behälter eine Regenerationsgasleitung (46, 46a, 46b) zur Zufuhr heißen Regenerationsgases zum Trocknungsmittel und eine ins Freie mündende Regenerationsabgasleitung (48, 48a, 48b) angeschlossen sind, und wobei im Regenerationsabgasstrom der Fühler (60) eines Temperaturfühlers (62, 62a, 62b) angeordnet ist, **dadurch gekennzeichnet, daß** eine Ausgangssignalleitung (61, 63) des Temperaturfühlers (62, 62a, 62b) mit einem Steueranschluß einer den Durchsatz von Regenerationsgas durch das Trocknungsmittel steuernden Einrichtung (64, 64a, 64b; 66; 59) verbunden ist.

12. Vorrichtung nach Anspruch 11, **dadurch gekennzeichnet, daß** die Einrichtung ein im Regenerationsstrom zum Behälter (32, 32a, 32b) angeordnetes Ventil (64, 64a, 64b) mit steuerbarem Gasdurchlaßquerschnitt ist.

13. Vorrichtung nach Anspruch 11, **dadurch gekennzeichnet, daß** die Einrichtung ein dem Trocknungsmittel Regenerationsgas zuführendes Gebläse (59) mit steuerbarer Drehzahl ist.

14. Vorrichtung nach einem der Ansprüche 11 bis 13, **dadurch gekennzeichnet, daß** der Behälter ein von einem Motor (9) drehangetriebener Rotor (32, 32a, 32b) ist.

15. Vorrichtung nach Anspruch 14, **dadurch gekennzeichnet, daß** die Drehzahl des Motors (9) in Abhängigkeit von der Drehzahl eines Regenerationsgasgebläses (59) oder in Abhängigkeit von dem Durchlaßquerschnitt des Ventils (64, 64a, 64b) steuerbar ist.

16. Vorrichtung nach einem der Ansprüche 11 bis 15, **dadurch gekennzeichnet, daß** die Regenerationsgasleitung (46, 46a, 46b) Auslaßleitung eines Regenerationsheizers (55, 55a, 55b) ist, in dessen Zuleitung (44, 44a) das Ventil (64, 64a) sitzt.

17. Vorrichtung nach Anspruch 16, **dadurch gekennzeichnet, daß** in der Zuleitung zu dem Regenerationsheizer (55, 55a, 55b) ein Wärmetauscher (51, 51b) angeordnet ist, der von der Regenerationsabgasleitung (48a, 48b) durchsetzt ist.

18. Vorrichtung nach einem der Ansprüche 11 bis 17, **dadurch gekennzeichnet, daß** die Zuleitung zum Regenerationsheizer (55a, 55b) mit einer Zweigleitung (26a, 26b) aus der das Feuchtgas führenden Zuleitung (24a, 24b) zum Behälter (32, 32a, 32b) verbunden ist.

19. Vorrichtung nach Anspruch 18, **dadurch gekennzeichnet, daß** die Zweigleitung (26b) einem Kühlabschnitt (38b) des in dem Rotor (32b) enthaltenen Trocknungsmittel zugeführt ist.

20. Vorrichtung nach einem der Ansprüche 11 bis 18, **dadurch gekennzeichnet, daß** die einen Kühlabschnitt (38a) des Rotors (32a) verlassende Gasleitung (28a) dem Gebläse (39, 39a) zugeführt ist.

## Claims

1. Method for drying humid gas particularly air wherein the humidity is withdrawn from the gas by a drying mass, and wherein the drying mass is freed from the humidity received from the gas by a hot regeneration gas, and wherein the temperature of the regeneration waste gas leaving the drying mass is monitored **characterized in that** the throughput of the regeneration gas through the drying mass is controlled in dependence from temperature of the regeneration waste gas such that the temperature of the regeneration waste gas remains at a predetermined value.

2. Method according to claim 1 **characterized in that** the humid gas is guided through a section (34, 34a, 34b) of the cyclically moved drying mass, and that the regeneration gas is conducted through a different section (36, 36a, 36b) of the drying mass.

3. Method for drying humid gas particularly air wherein the humidity is withdrawn from the gas by a drying mass and wherein the drying mass is freed from the received humidity by a hot regeneration gas according to claim 1 or 2 **characterized in that** the residence time of the drying mass within the gas to be dried is controlled in dependence from the temperature of the regeneration gas emanating from the drying mass and in dependency from the throughput of the regeneration gas through the drying mass.

4. Method according to anyone of claims 1 through 3 **characterized in that** the throughput of the regeneration gas through the drying mass is lowered and the residence time of the drying mass within the stream of the regeneration gas is extended in dependency from a decrease of the throughput of the regeneration gas when the temperature of the regeneration waste gas increases, and that at first the regeneration gas throughput is raised to a predetermined maximum value and only if the maximum value is reached the residence time is shortened when the temperature of the regeneration waste gas decreases.

5. Method according to anyone of the preceding claims **characterized in that** a portion of the humid gas is prepared to regeneration gas.

6. Method according to anyone of the preceding claims **characterized in that** a further portion of the humid gas is utilized for cooling the drying mass after the regeneration thereof.

7. Method according to claim 6 **characterized in that** the further portion is converted to regeneration gas after the drying mass has been cooled.

8. Method according to claim 6 **characterized in that** the further portion is fed to the humid gas to be dried after the drying mass has been cooled.

9. Method according to anyone of the preceding claims characterized that a molecular sieve or a silica gel are used as drying mass.

10. Method according to anyone of the preceding claims **characterized in that** the temperature of the regeneration gas emanating from the drying mass is monitored at the end of the regeneration of the drying mass.

11. Apparatus for drying a humid gas particularly air, the apparatus having a blower (39, 39a, 39b) which feeds the humid gas to a bin containing a drying mass, a regeneration gas conduit (46, 46a, 46b) being coupled to the bin for feeding hot regeneration gas to the drying mass, and a regeneration waste gas conduit (48, 48a, 48b) being coupled to the bin which opens into the atmosphere, and wherein the sensor (60) of a temperature sensor (62, 62a, 62b) is arranged within the regeneration waste gas stream, **characterized in that** an output signal line (61, 63) of the temperature sensor (62, 62a, 62b) is connected to a control terminal of a means (64, 64a, 64b; 66, 59) which controls the throughput of the regeneration gas through the drying mass.

12. Apparatus according to claim 11 **characterized in that** the means is a valve (64, 64a, 64b) having a controllable gas throughput cross section and being arranged within the regeneration stream to the bin (32, 32a, 32b).

13. Apparatus according to claim 11, **characterized in that** the means is a blower (59) having a controllable velocity and feeding regeneration gas to the drying mass.

14. Apparatus according to one of the claims 11 through 13 **characterized in that** the bin is a rotor (32, 32a, 32b) driven by a motor (9).

15. Apparatus according to claim 14 **characterized in that** the velocity of the motor (9) is controllable in dependency from the velocitiy of the regeneration gas blower (59) or from the throughput cross section of the valve (64, 64a, 64b).

16. Apparatus according to one of the claims 11 through 15 **characterized in that** the regeneration gas conduit (46, 46a, 46b) is an output conduit of a the regeneration gas heater (55, 55a, 55b), the valve (64, 64a) being arranged within a feeding conduit to the heater.

17. Apparatus according to claim 16 **characterized in that** a heat exchanger (51, 51b) is arranged in the feeding conduit to the regeneration heater (55, 55a, 55b) which is traversed by the regeneration waste gas conduit (48a, 48b).

18. Apparatus according to one of the claims 11 through 17, **characterized in that**. the feeding conduit to the regeneration heater (55a, 55b) is connected to a branch conduit (26a, 26b) from the feeding conduit (24a, 24b) to the bin ( 32, 32a, 32b) feeding the humid gas.

19. Apparatus to claim 18 **characterized in that** the branch conduit (26b) is connected to a cooling section (38b) of the drying mass within the rotor (32b).

20. Apparatus according to anyone of claims 11 through 18 **characterized in that** the gas conduit (28a) leaving the cooling section (38a) of the rotor (32a) is connected to the blower (39, 39a).

## Revendications

1. Procédé pour sécher un gaz humide particulièrement air, dans lequel l'humidité est extraite du gaz par un moyen desséchant, le moyen desséchant est libéré de l'humidité adsorbé du gaz par un gaz de régénération chauffé et la température du gaz de régénération échappant le moyen desséchant est détectée, **caractérisé en ce que** le débit du gaz de régénération à travers le moyen desséchant est réglé en dépendance de la température du gaz de régénération perdu de cette facon que la température du gaz de régénération perdu reste à une valeur préétablie.

2. Procédé selon la revendication 1 **caractérisé en ce que** le gaz humide est mené à travers une section (34,34a, 34b) de moyen desséchant mû cycliquement et le gaz de régénération est conduit à travers une autre section (36, 36a, 36b) de moyen desséchant.

3. Procédé pour sécher un gaz humide particulièrement air, dans lequel l'humidité est extraite du gaz par un moyen desséchant et le moyen desséchant est libéré de l'humidité adsorbée par un gaz de régénération chauffé selon la revendication 1 ou 2 **caractérisé en ce que** le temps de séjour du moyen desséchant dans le gaz étant séché est réglé en dépendance de la température du gaz de régénération échappant le moyen desséchant et en dépendance du débit du gaz de régénération à travers le moyen desséchant.

4. Procédé selon une des revendications 1 à 3, **caractérisé en ce que** le débit du gaz de régénération à travers le moyen desséchant est diminué et le temps de séjour du moyen desséchant dans le courant du gaz de régénération est prolongé en dépendance de la diminution du débit du gaz de régénération, quand la température du gaz de régénération perdu croît, et **en ce qu'**au premier le débit du gaz de régénération est augmenté à une valeur maximale préétablie et après le temps de séjour est abrégé si la valeur maximale préétablie est arrivée, quand la température du gaz de régénération perdu est diminuée.

5. Procédé selon une des revendications précédentes, **caractérisé en ce qu'**une part du gaz humide est traitée comme gaz de régénération.

6. Procédé selon une des revendications précédentes, **caractérisé en ce qu'**une autre part du gaz humide est utilisée pour réfrigération du moyen desséchant après la régénération de celui-ci.

7. Procédé selon revendication 6, **caractérisé en ce que** l'autre part est traitée comme gaz de régénération après la réfrigération du moyen desséchant.

8. Procédé selon revendication 6, **caractérisé en ce que** l'autre part est amenée au gaz humide étant séché après la réfrigération du moyen desséchant.

9. Procédé selon une des revendications précédentes, **caractérisé en ce qu'**un tamis moléculaire ou un gel de silice sont utilisés comme moyen desséchant.

10. Procédé selon une des revendications précédentes, **caractérisé en ce que** la température du gaz de régénération échappant le moyen desséchant est détectée à la fin de la régénération.

11. Dispositif pour sécher un gaz humide particulièrement air, ayant un ventilateur (39, 39a, 39b) qui amène le gaz humide à un récipient (32, 32a, 32b) contenant un moyen desséchant, une conduite du gaz de régénération (46, 46a, 46b) pour alimentation le moyen desséchant avec gaz de régénération et une conduite du gaz de régénération perdu (48, 48a, 48b) débouchant dans dehors étant jointes au récipient, et une sonde (60) d'un détecteur de température (62, 62a, 62b) étant arrangée dans le courant du gaz de régénération perdu, **caractérisé en ce qu'**une ligne du signal de sortie (61, 63) du détecteur de température (62, 62a, 62b) est reliée avec une borne de contrôle d'un arrangement (64, 64a, 64b ; 66 ; 59) réglant le débit du gaz de régénération à travers le moyen desséchant.

12. Dispositif selon revendication 11, **caractérisé en ce que** l'arrangement est une soupape (64, 64a, 64b) ayant une section de passage du gaz réglable et étant arrangée dans le courant de régénération dirigé au récipient (32, 32a, 32b).

13. Dispositif selon revendication 11, **caractérisé en ce que** l'arrangement est un ventilateur (58) ayant une vitesse de rotation réglable et amenant du gaz de régénération au moyen desséchant.

14. Dispositif selon une des revendications 11 à 13, **caractérisé en ce que** le récipient est un rotor (32, 32a, 32b) mis en marche par un moteur (9).

15. Dispositif selon revendication 14, **caractérisé en ce que** la vitesse de rotation du moteur (9) est réglable en dépendance de la vitesse de rotation d'une ventilateur du gaz de régénération (59) ou en dépendance de la section de passage de la soupape (64, 64a, 64b).

16. Dispositif selon une des revendications 11 à 15, **caractérisé en ce que** la conduite du gaz de régénération (46, 46a, 46b) est une conduite de l'échappement d'un chauffeur de régénération (55, 55a, 55b), la soupape (64, 64a) étant arrangée dans la conduite d'alimentation de celui-ci.

17. Dispositif selon revendication 16, **caractérisé en ce qu'**un échangeur thermique (51, 51b) est arrangé dans la conduite d'alimentation du chauffeur de régénération (55, 55a, 55b) qui est traversé par la conduite du gaz de régénération perdu (48a, 48b).

18. Dispositif selon une des revendication 11 à 17, **caractérisé en ce que** la conduite d'alimentation au chauffeur de régénération (55a, 55b) est reliée avec une conduite dérivée (26a, 26b) de la conduite d'alimentation (24a, 24b) menant du gaz humide au récipient (32, 32a, 32b).

19. Dispositif selon revendication 18, **caractérisé en ce que** la conduite dérivée (26b) est amenée à une section réfrigérante (38b) du moyen desséchant qui est contenu dans le rotor (32b).

20. Dispositif selon une des revendications 11 à 18, **caractérisé en ce que** la conduite du gaz (28a) provenant d'une section réfrigérante (38a) du rotor (32a) est amenée au ventilateur (39a, 39b).
